# EUROPEAN PATENT SPECIFICATION

(11) **EP 4 076 712 B1**
(45) Date of publication and mention of the grant of the patent: **02.04.2025**
(21) Application number: 20842207.1
(22) Date of filing: 15.12.2020
(51) Int. Cl.: B01D 69/10, B01D 61/00, B01D 61/02, F03G 7/00

(54) **SUPPORT FOR HIGH PRESSURE OSMOTIC MEMBRANE**
TRÄGER FÜR OSMOTISCHE HOCHDRUCKMEMBRAN
SUPPORT POUR MEMBRANE OSMOTIQUE À HAUTE PRESSION

(30) Priority: 18.12.2019 DK PA201901497
(43) Date of publication of application: 26.10.2022
(73) Proprietor: Saltkraft ApS, 6400 Sønderborg (DK)
(72) Inventor: CLAUSEN, Jørgen Mads, 6430 Nordborg (DK); THORSEN, Jan Eric, 6430 Nordborg (DK); PEDERSEN, Lars Storm, 6430 Nordborg (DK); MADSEN, Henrik Tækker, 6430 Nordborg (DK); NISSEN, Steen, 6430 Nordborg (DK)
(74) Representative: Abel & Imray LLP
(86) International application number: PCT/EP2020/086312
(87) International publication number: WO 2021/122663

(56) References cited:
- EP-A1- 1 094 886
- EP-B1- 1 094 886
- WO-A1-2015/064752
- DE-A1- 102014 100 659
- DE-B4- 102014 100 659
- JP-A- 2002 273 177
- US-A- 3 960 730
- US-A1- 2004 226 886
- US-A1- 2008 156 730
- US-A1- 2008 290 031
- US-A1- 2012 328 844
- US-B2- 9 919 273

## Description

### BACKGROUND

In classical osmosis system a semipermeable membrane allows a solvent to pass to a concentrated solution side by osmosis. The technique can be used to generate power from the salinity gradient energy resulting from the difference in the salt concentration. Solvent molecules diffuse across the semipermeable barrier into the solute solution to increase the pressure, where a connected conversion device (e.g. turbine) may convert the increased pressure to e.g. electricity.

One example of an osmosis membrane is to be found in US 2012/0328844 A1 disclosing a spacer formed from a planar material which has a plurality of convex support elements on one or both surfaces, and where the spacer is sandwiched between filter elements that each could be made up in multilayers of upper and lower membranes between which is situated a permeate spacer.

It is well known that a high pressure difference over the semipermeable membrane increases the efficiency of the energy generation, which gives the problem that the semipermeable membranes shall be sufficiently strong to withstand the pressures, which could reach levels like 70 bar, or 200 bar, or even higher.

In a membrane like seen in US 2012/0328844 A1 would not be suitable for such high pressures as the filter elements would collapse being pressed towards the planar material of the spacer.

DE102014100659A1 discusses a support insert (1) of a membrane module for arrangement between two membranes or between a membrane and a membrane carrier, with passages (2) for guiding and distributing a liquid along and on the membrane surface(s), the passages (2) at least form a flow path between at least one edge side (3, 4, 5, 6) of the support insert (1) and its front (7) and/or rear (8) side. Furthermore, mutually spaced support elements (11, 21) are provided, between which the passages (2) are formed and which at least partially on the front (7) and/or rear (8) of the support insert (1) bearing surfaces (14, 24) for the membrane(s) and/or the membrane support.

US 3960730A discusses an extracorporeal, disposable, dialyzer for use in a variety of artificial kidney or other mass transfer systems, which includes a sheet of support material rolled up in a spiral with a flattened tube of membrane material, the sheet of support material includes a large number of embossments protruding from each side thereof and arranged in similar geometrical patterns which are angularly off-set with respect to each other so that the summits of the embossments on one side are spaced apart differently along any given directional line than the directly opposed summits of the embossments on the other side, thus when the sheet of support material is rolled up in a spiral the summits of the embossments avoid interdigitation which would substantially occlude the blood passage formed by the tube of membrane material.

EP 1094886A1 discusses an active fluid separation device for removing a constituent of a fluid mixture. The separation device formed from a first polymeric structured layer having a plurality of flow channels defined in one surface, and a selectively permeable fluid separation media covering at least some of the flow channels. An external source is also included to provide a potential over the flow channels to promote movement of the fluid through the separation media, thereby removing a constituent component of the fluid mixture. A manifold in fluid contact with the flow channels of the structured layer may also be used to operatively permit the source to provide the potential over the flow channels.

US 2008/290031A1 discusses a spacer for filter modules which may be used not only for plate and frame filter modules, but also for spiral wound-type filter modules and which allows high packing densities while providing optimized cleanability, a spacer for filter modules is proposed to be disposed between two layers of a filter medium, said spacer comprising an essentially flat structured sheet material having upper and lower projections on the upper and lower surfaces thereof, respectively, said upper and lower projections defining an upper and lower bearing face for the layers of filter medium, wherein said projections rise from said upper and lower surfaces with wall portions and terminate in top portions, said upper and lower projections being spaced from each other in a direction parallel to the surface of the sheet material.

### SUMMARY OF THE INVENTION

The problem is solved with the features as they are indicated in the claims.

This includes introducing a support for a filtration membrane formed with a set of first projections and a set of second projections extending in opposite directions, where at least some of the first projections are connected to the first side of a porous sheet, and where the porous sheet second side is adapted to form support for said filtration membrane preventing the filtration membrane from contacting the first or second projections and entering the space formed between the support and porous sheet.

The combination of the porous sheet and the spacer ensures a sufficiently robustness towards the high pressures. The porous sheet thus keeps the membrane, or membrane configuration possible including e.g. a sandwiching structure of membrane(s), spacer layer(s) etc., from collapsing towards the support. The combination of a possible rigid porous sheet and the distribution of first and/or second projections ensures the areas of unsupported porous sheet between the first/second projections are sufficiently small to inhibit deformation under the pressures.

The first and/or second projections could comprise top areas that could be flat top surfaces facing a flat surface of the filtration membrane configuration, they could be curved facing similar curvatures of the filtration membrane configuration, or of other shapes.

An additional or alternative embodiment includes introducing a support for a filtration membrane configuration formed with a set of first projections and a set of second projections extending in opposite directions, where at least some of the first dimple shaped projections and/or second dimple shaped projections are shaped with first top surface areas forming contact face towards the filtration membrane, wherein the first top surface areas and/or second top areas are flat top surface areas.

In the present context dimple shaped projections refers to projections formed with surrounding flanks, or flanks at the full circumference of the flat first and/or second top surfaces.

The first dimple shaped projections and/or second dimple shaped projections as shaped with first top surface areas forming contact face towards the filtration membrane, wherein at least some of the first and/or second may be adapted to form contact to a filtration membrane configuration comprising the filtration membrane and a porous sheet (150).

At least some of the first and/or second top surfaces areas may be fixed to the porous sheet of the filtration membrane configuration, such as by welding or brazing.

The top surfaces in general enable the contact 'areas' connection from the support towards the filtration membrane configuration is of a substantial combined area, rather than a number of more point like connections.

The top surfaces areas forming contact face to a filtration membrane configuration forms a sandwiched construction with the support positioned between two filtration membrane configurations. The support thus could support two similar operating semipermeable filtration membranes, or two different flow paths could be formed on the opposite sides of the support forming flow path for respectively a fresh water and saltwater.

The support may be formed of a single sheet or foil shaped with the set of first projections and a second of second projections, such that a projection forms an inner chamber forming part of fluid flow conduit(s) formed between the support and the filtration membrane configuration(s). The combination of the projections and porous sheet prevent the filtration from being pushed into the inner chambers under the pressures.

In an embodiment a strong support is formed if the only flat areas extending in the direction parallel to the extension of the filtration membrane are the flat top surfaces to contact the filtration membrane .

In an embodiment the first and second projections are positioned in array configurations. Except for the first and second projections positioned at the edge portions of the support, the first and second projections are flanked in a 2D configuration by respective second and first projections. The 2D configuration are defined as the plane parallel to the extension of the filtration membrane, whereas the direction of the extension of the projections is orthogonal to this direction.

A support layer of said filtration membrane may be sandwiched between said second surface of said porous sheet and said filtration membrane.

The flat top surfaces may contact a first surface of a porous sheet of said filtration membrane configuration. In another embodiment the porous sheet is in integral part of the support forming a platform for other parts of the filtration membrane configuration like the semipermeable filtration membrane.

In an embodiment the filtration membrane of said filtration membrane configuration is positioned on the second surface of said porous sheet and thus is positioned in connection to the high pressure salt water, or in general fluid with high salt concentration in relation to a fresh fluid supply (e.g. water) with a lower salt concentration.

In an embodiment a support layer of said filtration membrane configuration is sandwiched between said second surface of said porous sheet and said filtration membrane.

An embodiment relates to an osmotic filtration device comprising a support connected to a filtration membrane according to any of the embodiments, where a high pressure flow path are formed at the distal side of the filtration membrane relative to the support, and a low pressure flow path are formed at the proximal side of the filtration membrane relative to the support, where high pressure and low pressure are seen relative to each other.

The osmotic filtration device may comprise a plural of configurations of supports sandwiched between upper and lower filtration membrane configurations connected to respectively first projection flat top surfaces and second projection flat top surfaces, such that the high pressure flow paths are formed between two filtration membrane configurations, and the low pressure flow paths are formed at the respective flow paths formed between the filtration membrane configurations and supports.

Spacers may be positioned between the respective two filtration membrane configurations in the high-pressure flow paths.

### FIGURES

- Fig. 1: A support for a filtration membrane comprising projections with flat top surface areas connected to a filtration membrane or filtration membrabe configuration.
- Fig. 2: A support for a filtration membrane comprising projections with flat top surface areas connected to upper and lower filtration membranes or filtration membrane configurations.
- Fig. 3: An embodiment filtration membrane configuration.
- Fig. 4A, B: An embodiment filtration system.
- Fig. 5A, B: Illustrations of flat top surface areas and curved top surface areas.
- Figs. 6A-D: Different embodiment shapes of the top surface areas.

### DETAILED DESCRIPTION OF THE INVENTION

It should be understood, that the detailed description and specific examples, while indicating embodiments of the invention, are given by way of illustration only, since various changes and modifications will become apparent to those skilled in the art from the detailed description.

In the following saltwater is used as an example fluid, but other fluids for other systems is also possible, such the food sector, where sugars could also form high osmotic pressures to be overcome, etc.

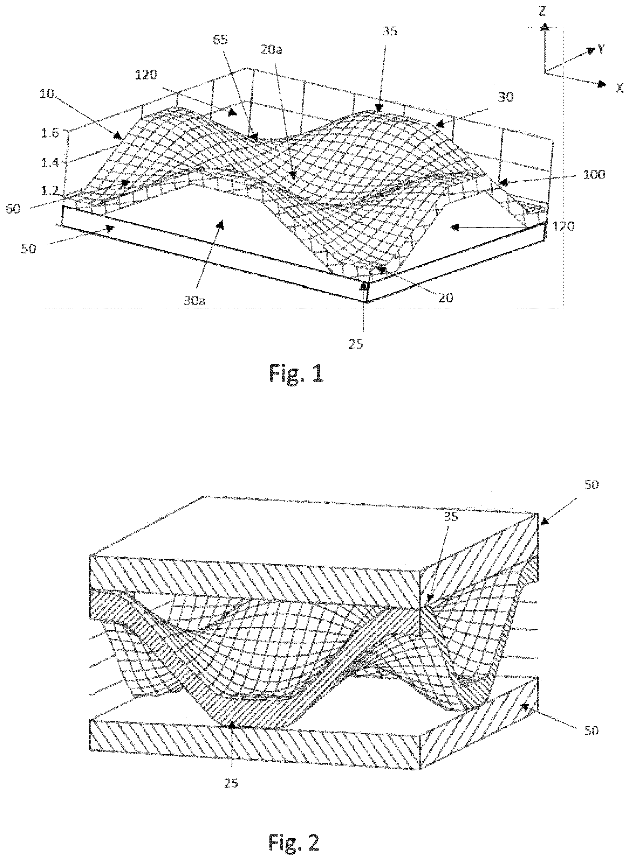

Fig. 1 illustrate an embodiment support (10) for a filtration membrane configuration (50). The support (10) is formed with a first set of projections (20) and a second set of projections (30) in opposite directions, where at least some of the first projections (20) are shaped with flat top surfaces (25) forming contact face to the filtration membrane configuration (50).

The flat top surfaces (25) thus forms contact areas towards the filtration membrane configuration (50), possible with a sheet (150) intermediate a membrane and a (semi-permeable) membrane (200) as it will be explained in relation to later figures.

In other not disclosed embodiments the top surface areas (25, 35) could be curving aligning with similar curvatures in the surface of the filtration membrane configuration (50).

The support (10) may be formed by pressing the projections (20, 30) in a flat sheet of a substantially rigid material (100), such as a sheet like a metal sheet, e.g. stainless steel, but could also be plastic, glass fiber, etc. They are formed such that a projection (20, 30) projecting to one side, at the opposite side defines a hollow or inner chamber (20a, 30a).

When contacting the filtration membrane configuration (50), the support (10) by the projections (20, 30) defines fluid flow conduit(s) (120) formed between the support (10) and the filtration membrane configuration(s) (50). The projection (20, 30) configuration ensures the flow(s) to be following a changing course passing between flanks (60) between neighbouring first projection (20) flat tops (25) and second projection (30) flat tops (35), and the curved transitions (65) between two adjacent respectively two flat first projection (20) flat tops (25) and correspondingly two second projection (30) flat tops (35).

The support (10) in the illustrated embodiment is formed such that, if a X-axis and Y-axis defines the 2D configuration of the extension of the filtration membrane configuration (50) and support (10), and the Z-axis is the direction of the extension of the projections (20, 30), then the only flat areas are the flat top surfaces (25, 35). With 'flat' areas are meant areas extending in the X and Y directions, by having no curvature or extension in the Z-direction. This, they are areas extending only in parallel to the filtration membrane configuration (50).

If any such flat areas existed in the areas between the flat top surfaces (25, 35) they would form weak parts of the support (10). When pressures are applied towards the support (10), all the forces then would be directed directly to such flat areas, which could lead to a collapse of the support (10). In the illustrated embodiment all the forces are directed into the flanks (60) and curved translations (65) making a significantly stronger construction.

Points such as turning points of the curved transitions (65) are not flat areas as such, as they form part of curvatures.

In the illustrated embodiment, except for the first (20) and second (30) projections positioned at the edge portions of the support (10), the first (20) and second (30) projections are flanked in the 2D configuration extended by the X and Y directions by respective second (30) and first (20) projections. The first (20) and second (30) projections thus may be positioned in an array manner.

In one not illustrated embodiment the configuration is such that there are more first projections (20) than second projections (30), or vice versa. This e.g. could be useful if two different fluids are to flow along the flow paths (120) formed at the opposing sides of the support (10), one being a high-pressure flow and the other a low pressure flow. In general, 'high pressure' in the present system are to be understood as having a higher pressure than the 'low pressure'. The terms thus are relative to each other.

Fig. 2 shows an embodiment where at least some of the second projections (30) are shaped with flat top surfaces (35) forming contact face to a filtration membrane configuration (50).

The flat first (25) and/or second (35) top surfaces assists in supporting the membrane configuration (50) and thus need to have a combined dimple density and total top surface area to support the membrane configuration (50), ensuring it does not collapse under the pressures.

In one embodiment all the first projections (20) and/or second projections (30) have flat top surfaces (25, 35).

In one embodiment the first projections (20) and/or second projections (30) to form contact face to the filtration membrane configuration (50) are the ones protruding furthest in the Z-directions, or in other words, being the highest projections (20, 30).

The first projections (20) and/or second projections (30) may be distributed in a 2-dimensional formation over the support (10), such as in an array formation.

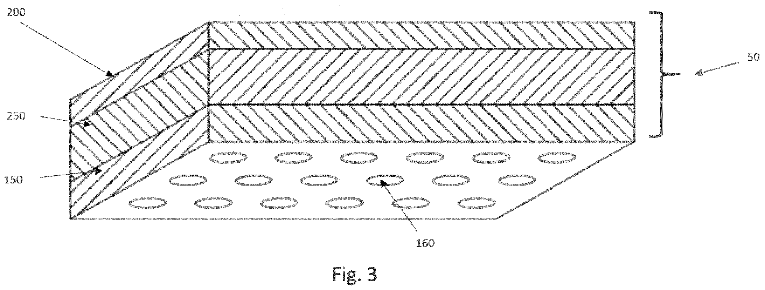

In one embodiment, at least some of the first (25) and/or second (35) top surfaces are fixed to the filtration membrane configuration (50), which could be by welding or brazing. This gives a strong construction. To ensure the support (10) could be used for any kind of semipermeable membrane (200) (see figure 3), the filtration membrane configuration (50) includes a porous sheet (150) where the flat top surfaces (25, 35) contacts a first surface of the porous sheet (150).

The filtration membrane configuration (50) typically will comprise filtration pores of a first dimension suitable for the required filtration purposes. For salt filtration a typical pore size is in the range of 0.1-1 nm. The porous sheet (150) too would comprise openings (160) for fluid to pass between a flow path (120) and the semipermeable membrane (200), where they may be formed of such a size they would not be suitable for filtration purposes, but would leave fluid substantially free to pass, and at the same time still sufficiently small to prevent the other parts (200, 250) of the a filtration membrane configuration (50) to be pushed through the openings (160) due to the pressures. The porous sheet (150) thus have openings (160) of a second dimension being significantly larger than the first dimension, such as being larger by factor 100 or 1000 or 10000, or 100.000 or 1.000.000, or even more, and may even be in the range of millimetres.

The porous sheet (150) may be of any suitable material capable to withstand the pressures without having e.g. the openings (160) deformed and damaged, and capable to carry the other parts (200, 250) of the filtration membrane configuration (50). It could be formed as a mesh or a perforated foil and could possibly be formed of the same material as the support (10) or another material that enables them to be fixed together. It may also be formed of a substantially rigid material compared to the other parts of the filtration membrane configuration (50).

In one embodiment the support (10) with porous sheets (150) contacting the first (25) and second (35) top surface areas as a sandwich construction being less than 1cm thick, or even less than 0,2cm thick.

Fig. 3 illustrates one embodiment filtration membrane configuration (50) showing the porous sheet (150) and a membrane support layer (250) sandwiched between the porous sheet (150) and the semipermeable membrane (200). The support layer (250) forms a barrier between the semipermeable membrane (200) and the porous sheet (150). This helps to inhibit the semipermeable membrane (200) from being pushed out of the openings (160), even if it is relatively thin, soft, flexible, slender etc.

The concept further allows a greater part of the membrane to be active. If the semipermeable membrane (200) is placed directly on the porous sheet (150), only the part of the membrane (200) over the pores (160) will be active. By inserting the support layer (250), water can move through the membrane (200), distribute throughout the support layer (250) and move through the pores. In reverse, water moves through the pores of the porous sheet (150), distributes in the support layer (250) and contacts the entire surface of the membrane (200).

In some embodiments, the membranes (200) have a support layer (250) embedded.

In this configuration, the membrane active layer (with pores of 0.1-1 nm) is facing away from the support layer (250) and towards the high pressure side with saltwater (this is the most effective orientation of membranes for pressure retarded osmosis).

The orientation will be the same for reverse osmosis applications.

The configuration with the porous sheet (150) and optionally the support layer (250) enables using basically any semipermeable membrane (200) in the system.

Though the embodiments disclose the porous sheet (150) forming an integral part of the filtration membrane configuration (50), it may also be seen as an integral part of the support (10), being fixed to the flat tops surfaces (25, 35) and thus forming a platform to carry other parts like a support layer (250) and semipermeable membrane (200).

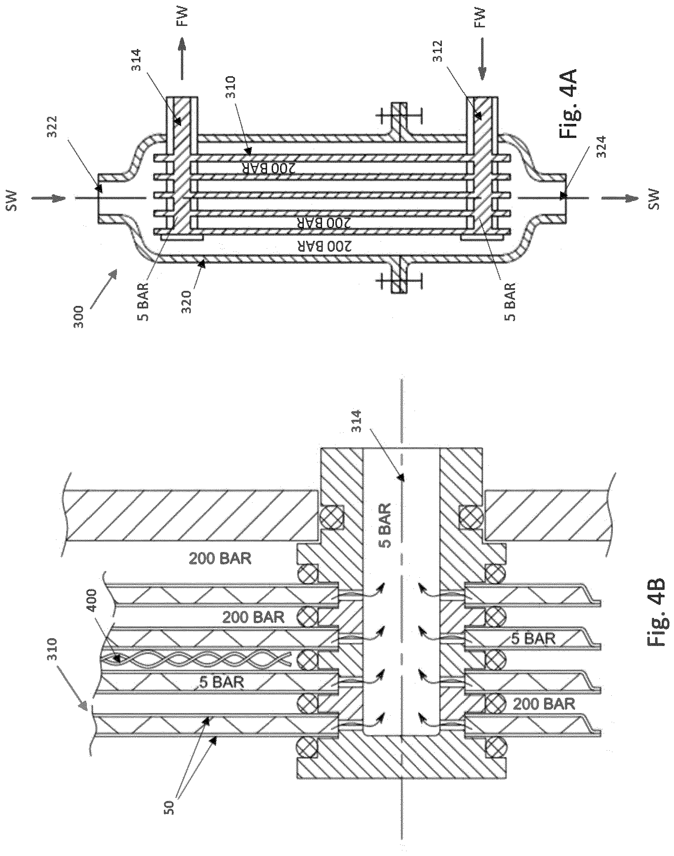

Figs. 4A and 4B disclose one embodiment implementation of the support (10) in an osmotic filtration device (300). Here a plural of filtration units (310) are positioned within a shell (320). Fresh water is circulated to and from the filtration units (310) by freshwater inlet (312) and freshwater outlet (314).

The figures 4A and 4B are to be taken as examples only, and other configurations could also apply.

The inner space of the shell (320) forms part of the flow path of the salt water being supplied from the saltwater inlet (322) and extracted, e.g. to a turbine, by saltwater outlet (324).

In the following fresh water is defined as a fluid having a lower salt concentration than the salt water, or salt containing fluid in general.

Fig. 4B shows in more details part of some of the filtration units (310) comprising supports (10) sandwiched between two filtration membrane configurations (50). Within the shell the high pressurized salt water pushes the filtration membrane configurations (50) towards the supports (10), whereas due to the osmosis, water from the low pressure fresh water flow paths (120) within the filtration units (310) and defined by the supports (10), will diffuse through the filtration membrane configurations (50) into the inner space of the shell (320). In one embodiment this pressure alone keeps e.g. the semipermeable membrane (200) and optional support layer (250) in position, whereas in other embodiments spacer structures (400) are positioned between the neighbouring filtration units (310) assisting in holding e.g. the semipermeable membranes (200) in position, to ensure sufficient mixing of the fluids preventing salt deposits forming in pockets ensuring an uniform salt concentration, but also to keep the individual filtration units (310) apart.

In the illustrated embodiment it is shown that a high pressure flow path are formed at the distal side of the filtration membrane configuration relative to the support, and a low pressure flow path are formed at the proximal side of the filtration membrane configuration relative to the support, being within the filtration units, where high pressure and low pressure are seen relative to each other.

In a different embodiment not illustrated, it is utilized that two different flow paths are formed at the opposing sides of the support (10), and that the support (10) is designed to withstand high pressures. In this embodiment one of the two flow paths then could be part of the high pressure saltwater flow path, whereas the other is to the low pressure freshwater flow path. In this embodiment the combined device of filtration membrane configurations (50) and support (10) could be rolled forming a classical rolled filtration device (300).

In one embodiment the support (10) is formed with openings allowing passage between the fluid flow conduits (120) formed at the opposing sides of the support (10). This could be due to mixing, simple pressure equalization etc., or even to increase the strength of the support (10).

The openings (160) in the porous sheet (150) may be positioned such that they are not formed where contacting the top surface areas (25, 35). In an alternative embodiment, some openings (160) are formed to align with openings formed in the top surface areas (25, 35), the higher a salt concentration, the higher the pressure.

The size of the top surface areas (25, 35) at the one hand should be sufficiently small not to significantly reduce the flow path (120) areas, but on the other hand they should be sufficiently large to give sufficient support. In one embodiment the sized related to the expected salt concentration.

To ensure the support (10) good strength to weight ratio making it durable the first (20) and second (30) projections are arranged in a matrix pattern with a distance X1 between centres of the projections (20, 30) in adjacent rows and a distance X2 between their centres in adjacent columns, where their top surface areas (25, 35) have a circumference C and where C/X1 is in the range of 1,03-2,27, such as in the range of 1,1-2,3. Correspondingly, C/X2 may preferably also be in the range of 1,1-4,32, such as in the range of 1,2-4,0.

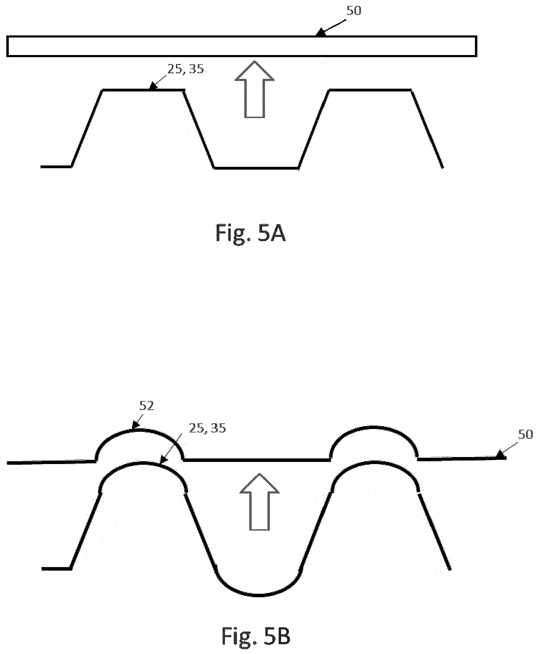

Fig. 5A illustrate the embodiment where flat top surface areas (25, 35) are to be connected to the lower surface of the filtration membrane configuration (50) and/or porous sheet (150).

Fig. 5b illustrate the embodiment where curved top surface areas (25, 35) are to be connected to the lower surface of the filtration membrane configuration (50) and/or porous sheet (150). The respective lower surface of the filtration membrane configuration (50) and/or porous sheet (150) being formed with corresponding curved shapes (52) such that a contact is formed over a contact area.

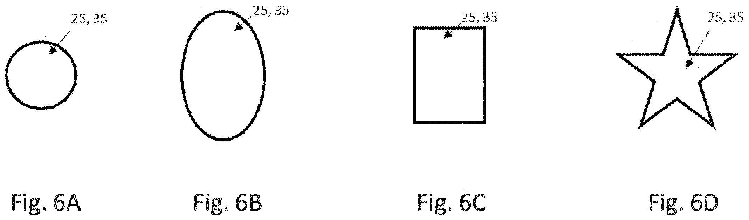

Figs. 6 show an embodiment where the top surface areas (25, 35) are circular (fig. 6A), oval (fig. 6B), rectangular (fig. 6C) or star shaped (fig. 6D), but any other shape would also apply.

## Claims

1. Support (10) for filtration membrane (200) formed with a set of first projections (20) and a set of second projections (30) extending in opposite directions, where at least some of the first dimple shaped projections (20) and/or second dimple shaped projections (30) are shaped with top surface areas (25, 35) forming contact face towards the filtration membrane(200), wherein said top surface areas (25, 35) are flat top surface areas; wherein dimple shaped projections are projections formed with flanks at the full circumference of the top surface areas and **characterised in that** the only flat areas extending in the direction parallel to the extension of the filtration membrane (200) are the top surface areas (25, 35) and wherein the first (20) and second (30) projections are arranged in a matrix pattern with a distance X1 between centres of the projections (20, 30) in adjacent rows and a distance X2 between their centres in adjacent columns, where their top surface areas (25, 35) have a circumference C and where C/X1 is in the range of 1,03-2,27.

2. Support (10) according to claim 1, further comprising a porous sheet (150) and the first top surface areas (25) are connected to a first side of the porous sheet (150), and where the porous sheet (150) second side is adapted to form support for said filtration membrane (200) preventing the filtration membrane (200) from contacting the first (20) or second (30) projections and entering the space formed between the support (10) and porous sheet (150).

3. Support (10) according to claim 2, wherein the porous sheet is an integral part of the support (10) forming a platform for the filtration membrane (200) of a filtration membrane configuration (50).

4. Support (10) according to claim 1, wherein at least some of the top surfaces areas (25, 35) are fixed to a first side of a porous sheet (150) of a filtration membrane configuration (50) comprising the filtration membrane (200) and where the porous sheet (150) second side is adapted to form support for said filtration membrane (200) preventing the filtration membrane (200) from contacting the first (20) or second (30) projections and entering the space formed between the support (10) and porous sheet (150) .

5. Support (10) according to claim 4, wherein said top surfaces areas (25, 35) are fixed by welding, gluing or brazing.

6. Support (10) according to any of the previous claims, wherein it is formed of a single sheet (100) shaped with the set of first projections (20) and a set of second projections (30), when contacting the filtration membrane configuration (50) or filtration membrane (200), the support (10) by the projections (20, 30) defines fluid flow conduit(s) (120) formed between the support (10) and the filtration membrane configuration (50) or filtration membrane (200) and the projection (20, 30) configuration ensures the flow(s) to be following a changing course passing between flanks (60) between neighbouring first projection (20) flat top surface areas (25) and second projection (30) flat top surface areas (35), and the curved transitions (65) between two adjacent respectively two flat first projection (20) flat top surface areas (25) and correspondingly two second projection (30) flat top surface areas (35).

7. Support (10) according to any of the previous claims, wherein the filtration membrane configuration comprises a support layer (250) of said filtration membrane (200), and the support layer (250) is sandwiched between said second surface of said porous sheet (150) and said filtration membrane (200).

8. Osmotic filtration device (300) comprising a support (10) for a filtration membrane (200) according to any of the previous claims, where a high pressure flow path(s) are formed at the distal side of the filtration membrane (200) relative to the support (10), and a low pressure flow path(s) are formed at the proximal side of the filtration membrane (200) relative to the support (10), where high pressure and low pressure are seen relative to each other.

9. Osmotic filtration device (300) according to claim 8, comprising a plural of configurations of supports (10) sandwiched between upper and lower filtration membrane (200) connected to respectively first projection (20) flat top surfaces (25) and second projection (30) flat top surfaces (35), such that the high pressure flow paths are formed between two filtration membrane (200), and the low pressure flow paths are formed at the respective flow paths formed between the filtration membrane (200) and supports (10).

10. Osmotic filtration device (300) according to claim 9, where spacers (400) are positioned between the respective two filtration membranes (200) in the high-pressure flow paths.

## Patentansprüche

1. Träger (10) für Filtrationsmembran (200), gebildet mit einem Satz erster Vorsprünge (20) und einem Satz zweiter Vorsprünge (30), die sich in entgegengesetzten Richtungen erstrecken, wobei wenigstens einige der ersten grübchenförmigen Vorsprünge (20) und/oder zweiten grübchenförmigen Vorsprünge (30) mit oberen Oberflächenbereichen (25, 35) geformt sind, die eine Kontaktfläche zur Filtrationsmembran (200) hin bilden, wobei die oberen Oberflächenbereiche (25, 35) flache obere Oberflächenbereiche sind; wobei grübchenförmige Vorsprünge Vorsprünge sind, die mit Flanken am gesamten Umfang der oberen Oberflächenbereiche ausgebildet sind und **dadurch gekennzeichnet sind, dass** die einzigen flachen Bereiche, die in der Richtung parallel zur Verlängerung der Filtrationsmembran (200) verlaufen, die oberen Oberflächenbereiche (25, 35) sind, und wobei die ersten (20) und zweiten (30) Vorsprünge in einem Matrixmuster mit einem Abstand X1 zwischen Mitten der Vorsprünge (20, 30) in benachbarten Reihen und einem Abstand X2 zwischen deren Mitten in benachbarten Spalten angeordnet sind, wobei deren obere Oberflächenbereiche (25, 35) einen Umfang C besitzen und wobei C/X1 im Bereich von 1,03 - 2,27 liegt.

2. Träger (10) gemäß Anspruch 1, ferner umfassend ein poröses Flächengebilde (150), wobei die ersten oberen Oberflächenbereiche (25) mit einer ersten Seite des porösen Flächengebildes (150) verbunden sind, und wobei die zweite Seite des porösen Flächengebildes (150) angepasst ist, um einen Träger für die Filtrationsmembran (200) zu bilden, der verhindert, dass die Filtrationsmembran (200) die ersten (20) oder zweiten (30) Vorsprünge berührt und in den zwischen dem Träger (10) und dem porösen Flächengebilde (150) gebildeten Raum eintritt.

3. Träger (10) gemäß Anspruch 2, wobei das poröse Flächengebilde ein integraler Teil des Trägers (10) ist, der eine Plattform für die Filtrationsmembran (200) einer Filtrationsmembrankonfiguration (50) bildet.

4. Träger (10) gemäß Anspruch 1, wobei wenigstens einige der oberen Oberflächenbereiche (25, 35) an einer ersten Seite eines porösen Flächengebildes (150) einer Filtrationsmembrankonfiguration (50), die die Filtrationsmembran (200) umfasst, befestigt sind, und wobei die zweite Seite des porösen Flächengebildes (150) angepasst ist, um einen Träger für die Filtrationsmembran (200) zu bilden, der verhindert, dass die Filtrationsmembran (200) die ersten (20) oder zweiten (30) Vorsprünge berührt und in den zwischen dem Träger (10) und dem porösen Flächengebilde (150) gebildeten Raum eintritt.

5. Träger (10) gemäß Anspruch 4, wobei die oberen Oberflächenbereiche (25, 35) durch Schweißen, Kleben oder Löten befestigt sind.

6. Träger (10) gemäß einem der vorhergehenden Ansprüche, wobei er aus einem einzigen Flächengebilde (100) gebildet ist, das geformt ist mit dem Satz erster Vorsprünge (20) und einem Satz zweiter Vorsprünge (30), wenn die Filtrationsmembrankonfiguration (50) oder die Filtrationsmembran (200) berührt wird, der Träger (10) durch die Vorsprünge (20, 30) eine oder mehrere Fluidstromleitung(en) (120) definiert, die zwischen dem Träger (10) und der Filtrationsmembrankonfiguration (50) oder Filtrationsmembran (200) ausgebildet ist/sind, und die Konfiguration der Vorsprünge (20, 30) sicherstellt, dass der Strom oder die Ströme einem sich ändernden Kurs folgt/folgen, der zwischen den Flanken (60) zwischen benachbarten flachen oberen Oberflächenbereichen (25) der ersten Vorsprünge (20) und flachen oberen Oberflächenbereichen (35) der zweiten Vorsprünge (30) und den gekrümmten Übergängen (65) zwischen zwei benachbarten bzw. zwei flachen oberen Oberflächenbereichen (25) der ersten Vorsprünge (20) und entsprechend zwei flachen oberen Oberflächenbereichen (35) der zweiten Vorsprünge (30) verläuft.

7. Träger (10) gemäß einem der vorhergehenden Ansprüche, wobei die Filtrationsmembrankonfiguration eine Trägerschicht (250) der Filtrationsmembran (200) umfasst und die Trägerschicht (250) sich zwischen der zweiten Oberfläche des porösen Flächengebildes (150) und der Filtrationsmembran (200) befindet.

8. Osmotische Filtrationsvorrichtung (300), umfassend einen Träger (10) für eine Filtrationsmembran (200) gemäß einem der vorhergehenden Ansprüche, wobei eine oder mehrere Hochdruck-Strombahn(en) an der distalen Seite der Filtrationsmembran (200) relativ zum Träger (10) ausgebildet ist/sind und eine oder mehrere Niederdruck-Strombahn(en) an der proximalen Seite der Filtrationsmembran (200) relativ zum Träger (10) ausgebildet ist/sind, wobei Hochdruck und Niederdruck relativ zueinander zu sehen sind.

9. Osmotische Filtrationsvorrichtung (300) gemäß Anspruch 8, umfassend eine Mehrzahl von Konfigurationen von Trägern (10), die sich zwischen oberer und unterer Filtrationsmembran (200) befinden, verbunden mit flachen oberen Oberflächen (25) der ersten Vorsprünge (20) bzw. flachen oberen Oberflächen (35) der zweiten Vorsprünge (30), so dass die Hochdruck-Strombahnen zwischen zwei Filtrationsmembranen (200) gebildet werden und die Niederdruck-Strombahnen an den entsprechenden, zwischen der Filtrationsmembran (200) und den Trägern (10) gebildeten Strombahnen gebildet werden.

10. Osmotische Filtrationsvorrichtung (300) gemäß Anspruch 9, wobei sich Spacer (400) zwischen den jeweiligen zwei Filtrationsmembranen (200) in den Hochdruck-Strombahnen befinden.

## Revendications

1. Support (10) pour membrane de filtration (200) formé avec un ensemble de premières saillies (20) et un ensemble de secondes saillies (30) s'étendant dans des directions opposées, dans lequel au moins certaines des premières saillies en forme de fossette (20) et/ou des secondes saillies en forme de fossette (30) sont formées avec des zones de surface supérieures (25, 35) formant une face de contact vers la membrane de filtration (200), dans lequel lesdites zones de surface supérieures (25, 35) sont des zones de surface supérieures plates ; dans lequel les saillies en forme de de fossette sont des saillies formées avec des flancs sur toute la circonférence des zones de surface supérieures, et **caractérisé en ce que** les seules zones plates s'étendant dans la direction parallèle à l'extension de la membrane de filtration (200) sont les zones de surface supérieures (25, 35), et dans lequel les premières (20) et secondes (30) saillies sont agencées en un motif matriciel avec une distance X1 entre les centres des saillies (20, 30) dans des rangées adjacentes et une distance X2 entre leurs centres dans des colonnes adjacentes, dans lequel leurs zones de surface supérieures (25, 35) présentent une circonférence C, et dans lequel C/X1 se situe dans la plage de 1,03 à 2,27.

2. Support (10) selon la revendication 1, comprenant en outre une feuille poreuse (150), et les premières zones de surface supérieures (25) sont connectées à un premier côté de la feuille poreuse (150), et dans lequel le second côté de la feuille poreuse (150) est adapté pour former un support pour ladite membrane de filtration (200) empêchant la membrane de filtration (200) de venir en contact avec les premières (20) ou secondes (30) saillies et de pénétrer dans l'espace formé entre le support (10) et la feuille poreuse (150).

3. Support (10) selon la revendication 2, dans lequel la feuille poreuse fait partie intégrante du support (10) formant une plate-forme pour la membrane de filtration (200) d'une configuration de membrane de filtration (50).

4. Support (10) selon la revendication 1, dans lequel au moins certaines des zones de surfaces supérieures (25, 35) sont fixées à un premier côté d'une feuille poreuse (150) d'une configuration de membrane de filtration (50) comprenant la membrane de filtration (200), et dans lequel le second côté de la feuille poreuse (150) est adapté pour former un support pour ladite membrane de filtration (200) empêchant la membrane de filtration (200) de venir en contact avec les premières (20) ou secondes (30) saillies et de pénétrer dans l'espace formé entre le support (10) et la feuille poreuse (150).

5. Support (10) selon la revendication 4, dans lequel lesdites zones de surface supérieures (25, 35) sont fixées par soudage, collage ou brasage.

6. Support (10) selon l'une quelconque des revendications précédentes, dans lequel il est formé d'une feuille unique (100) formée avec l'ensemble de premières saillies (20) et un ensemble de secondes saillies (30), lors de la mise en contact de la configuration de membrane de filtration (50) ou de la membrane de filtration (200), le support (10), par l'intermédiaire des saillies (20, 30), définit un ou des conduits d'écoulement de fluide (120) formé(s) entre le support (10) et la configuration de membrane de filtration (50) ou la membrane de filtration (200) et la configuration des saillies (20, 30) garantit que le ou les écoulements suivent une trajectoire changeante passant entre des flancs (60) entre des zones de surface supérieures plates (25) de première saillies (20) et des zones de surface supérieures plates (35) de secondes saillies (30) voisines, et les transitions incurvées (65) entre deux zones de surface supérieures plates (25) de premières saillies (20) respectivement adjacentes et deux zones de surface supérieures plates (35) correspondantes de secondes saillies (30).

7. Support (10) selon l'une quelconque des revendications précédentes, dans lequel la configuration de membrane de filtration comprend une couche de support (250) de ladite membrane de filtration (200), et la couche de support (250) est enserrée entre ladite seconde surface de ladite feuille poreuse (150) et ladite membrane de filtration (200).

8. Dispositif de filtration osmotique (300) comprenant un support (10) pour une membrane de filtration (200) selon l'une quelconque des revendications précédentes, dans lequel un ou des trajets d'écoulement à haute pression sont formés au niveau du côté distal de la membrane de filtration (200) par rapport au support (10), et un ou des trajets d'écoulement à basse pression sont formés au niveau du côté proximal de la membrane de filtration (200) par rapport au support (10), dans lequel une haute pression et une basse pression sont vues l'une par rapport à l'autre.

9. Dispositif de filtration osmotique (300) selon la revendication 8, comprenant une pluralité de configurations de supports (10) enserrées entre une membrane de filtration supérieure et inférieure (200) connectées respectivement à des surfaces supérieures plates (25) de premières saillies (20) et à des surfaces supérieures plates (35) de secondes saillies (30), de sorte que les trajets d'écoulement à haute pression sont formés entre deux membranes de filtration (200), et les trajets d'écoulement à basse pression sont formés au niveau des trajets d'écoulement respectifs formés entre la membrane de filtration (200) et les supports (10).

10. Dispositif de filtration osmotique (300) selon la revendication 9, dans lequel des entretoises (400) sont positionnées entre les deux membranes de filtration respectives (200) dans les trajets d'écoulement à haute pression.
